# EUROPEAN PATENT APPLICATION

(11) **EP 3 038 393 A1**
(43) Date of publication of application: **29.06.2016**
(21) Application number: 14199986.2
(22) Date of filing: 23.12.2014
(51) Int. Cl.: H04W 12/06, H04W 8/20

(54) **Method for connecting to a visited cellular network based on a second subscriber identity and mobile station for executing said method**

(71) Applicant: Gemalto M2M GmbH, 81541 München (DE)
(72) Inventor: Ostheeren, André, 14532 KLEINMACHNOW (DE); Breuer, Volker, 16727 BOETZOW (DE); Ulrich, Thomas, 67098 BAD DÜRKHEIM (DE)
(74) Representative: Grevin, Emmanuel

(57) **Abstract**

The present invention relates to a method for provisioning a secure element of a mobile station, dedicated to work in a cellular network, said secure element belonging to a first registration authority where it has a first identity. The invention implements the steps of:
- for the mobile station (3), sending a configuration message towards a remote provisioning server (6) related to a second registration authority (5), said configuration message including a creation request of a second identity associated with the second registration authority (5),
- for the remote provisioning server (6), managing a second identity's creation,
- for the remote provisioning server (6), sending a response towards the secure element (1) via mobile station (3) including a data record related to the second identity,
- for the secure element (1), storing the second identity in a memory area able to store data records related to multiple valid identities,
- for the mobile station (3), activating the second identity using the data record received by the secure element (1) and
- for the mobile station (3), accessing the second cellular network (7) with the second identity at least for one service.

## Description

### FIELD OF THE INVENTION

The present invention relates to a method of provisioning a secure element of a mobile station, dedicated to work and use services in a cellular network, said secure element belonging to a first registration authority where it has a first identity associated to a first cellular network.

More precisely, the invention addresses the case where the mobile station is located in an alternative second cellular network and requests services in this alternative second cellular network.

The invention also pertains to a secure element intended to be connected to a mobile station, dedicated to work in a cellular network, said secure element belonging to a first registration authority where it has a first identity.

The invention further relates to mobile station designed to work in a cellular network and comprising a secure element to be provisioned.

At last the invention relates to a cellular network to enable a provisioning method according to the invention.

### BACKGROUND OF THE INVENTION

In the field of wireless communication according to wireless technology standards like 3GPP (GSM, UMTS, LTE, and following), there is a growing tendency of subscribers to use their mobile stations outside their home cellular network, e.g. during vacations, global business trips. This situation is well known under the term "roaming". A cellular network means in particular a mobile communication network, in the following referenced as PLMN.

The establishment of a connection in a PLMN always contains the verification of subscriber information inter alia authentication and subscriber identity. The authentication and subscriber information means any information held by a PLMN provider to subscribers, of its services, other than traffic data or content data, and by which can be established (i) the type of communication service used, the technical provisions thereof, and the period of service; (ii) the subscriber's identity, and/or (iii) any information regarding the location of installed communications equipment.

A PLMN provider is a provider of wireless communications services that owns or controls all the elements necessary to sell and deliver services to a subscriber including radio spectrum allocation, wireless network infrastructure, backhaul infrastructure, billing, customer care, provisioning computer systems and marketing and repair organizations.

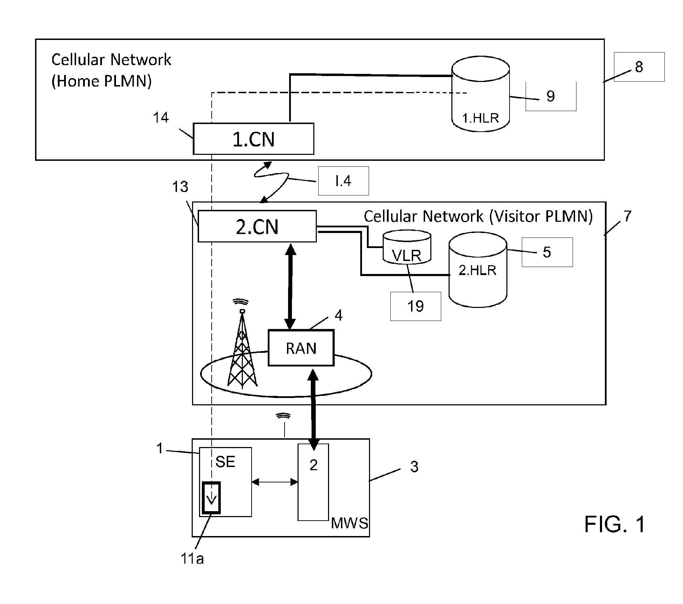

Figure 1 is showing an architecture of wireless communication with a typical roaming scenario in which the invention would be advantageously implemented.

This comprises a mobile station, typically a mobile wireless station, operating in a PLMN. The terminology mobile station, designated by MWS 3 in the following, includes any kind of mobile wireless user equipment, fixed or mobile subscriber unit, pager, cellular telephone, computer, wireless module or any other type of user device capable of operating in a wireless environment.

The MWS 3 is coupled to a secure element, hereinafter designated under the SE 1 acronym. It is here noted that, when referred to hereafter, the terminology secure element, SE 1, includes a Universal Integrated Circuit Card (UICC), a subscription identity module (SIM), an UMTS subscriber identity module (USIM), a machine identification module (MIM), etc.

Such SE 1 further comprises a memory means 11 a configured to store configuration and subscriber identity information or cryptographic key material such as PINs or other subscriber's authentication element. The memory means 11 a are in particular configured to store one subscriber identity record related to the subscription of the subscriber and its mobile wireless station communication in a PLMN. The subscriber identity record is referenced in the following also as PLMN identity.

It is here noted that the SE 1 can alternatively be integrated in or independent from the MWS 3 but connected.

In addition, the MWS 3 contains a communication unit 2 that allows applications existing in the SE 1 to issue commands, during a card session, to the MWS 3, to receive responses and also to operate the messages from and to the SE 1 from a radio access network.

Further figure 1 shows the internal structure of PLMN 7 as a typical exemplary structure, comprising one or more radio access networks designated by RAN 4, a core network, designated by 2.CN 13, a visitor location register, designated by VLR 19, dedicated for location areas of visiting users, and a second registration authority, designated by 2.HLR 5. This 2.HLR is storing the subscriber information, e.g. PLMN identities which have the PLMN 7 as a home network.

Further illustrated in Fig. 1 is a PLMN 8 wherein a core network, designated by 1.CN 14 and a first registration authority, designated by 1.HLR 9 are present. Such a PLMN 8 acts typically as a home PLMN, also referred in the following as first PLMN, the PLMN 7 as alternative second PLMN or visited PLMN in a roaming context.

The terminology 1.HLR and 2.HLR includes an authentication center with a main database of permanent subscriber information for a related PLMN and contains pertinent user information, including address, account status, and preferences.

The SE 1 with its applications interfaces to the communication unit 2 in the MWS 3 which mediates access to the provisioned radio channels of an air interface of the related RAN 4.

The PLMN 7 preferably provides one or more RANs implementing different cellular communication standards, like 2G (GSM, GPRS, EDGE), 3G (UMTS, WCDMA, CDMA2000, 1xRTT, etc.) or 4G (LTE, LTE advanced, etc.) as well as other wireless networks employing identification units with corresponding functions.

It is generally arbitrary in which of the RAN 4, the MWS 3 is operating with its air interface.

The RAN 4 typically may also include network entities depending on the cellular communication standards 2G, 3G or 4G such as a base station, base station controller, NodeB, radio network controller or eNodeB which may be any type of device configured to wirelessly interface with at least one of the MWSs.

The RAN 4 is in communication with the 2.CN 13. Moreover such 2.CN 13 is able to facilitate transmissions and receives signaling and user data messages to and from the 2.HLR 5.

The 2.CN 13 is able to establish connectivity to the 1.CN 14 of PLMN 8. Said 1.CN 14 can transmit and receive signaling and user data messages to and from the 1.HLR 9.

Finally, the authenticating SE-based user affiliation from a first identity to the PLMN 8, e.g. in a roaming scenario, is schematically represented in the figure 1 by a dashed line between the 1.HLR 9 and the memory means 11 a of the SE 1.

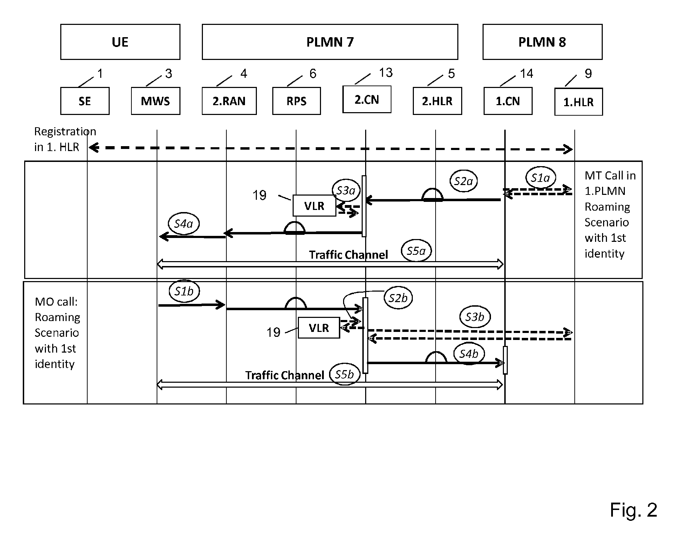

Fig. 2 shows a simplified communication sequences path for the communication of a mobile terminated call, designated as MT Call, and a mobile originated call, designated as MO Call, respectively in a roaming scenario. Such roaming can relate to data or voice roaming.

The SE 1 is registered with its first identity in the 1.HLR 9 and the MWS 3 is located in the area of the visited PLMN 7. When a MT Call from outside or inside PLMN 8 to the MWS 3 has to be established in a step S1 a, the 1.CN 14 identifies that the MWS 3 is located in another PLMN 7 and therefore requests routing information from the 1.HLR 9 at step S1a. The call is then routed at step S2a from the 1.CN 14 to the 2.CN 13 which further requires location information from, the VLR 19, step S3a, in order to route the call to the 2.RAN 4 in whose area the MWS 3 of the respective user is currently roaming and further establishes the radio connection between the 2.RAN 4 to the MWS 3, at step S4a. It then subsequently establishes a traffic channel between the 1.CN 14 and the MWS 3, step S5a.

In case of a MO Call occurs with its registration in the 1.HLR, the MWS 3 starts at step S1b the radio connections to the 2.RAN 4 which routes the requesting call to the 2.CN 13 where the 2.CN 13 requests further information from the VLR 19, to handle the outgoing call, step S2b.

If the VLR 19 in connection with a request to the 1.HLR, step S3b, determines that the outgoing call is allowed, it requests the establishment of a communication channel at the 1.CN, step S4b. On this base a traffic channel from the MWS 3 to the destination in the 1.CN 14 is established, at step S5b, and further the call may be routed to a 3^{rd} party in the network.

As it is well know, such a mechanism leads to additional billing for the user. The costs of data roaming are currently very high and individually dependent on the home PLMN providers. In opposite, visited PLMN providers offer flat rates in individual countries much lower than it is for data roaming.

The problem of high roaming charges is not yet solved, except by disabling the data roaming or by getting a local SIM, including prepaid SIM Cards. The use of a prepaid SIM or local SIM card is the most common way today. The subscriber however has to get a SIM card of the visited PLMN provider and insert it into his cell phone. Main drawback is that he/she has a completely new PLMN identity and is under the home number no longer available. Besides, in particular the Body of European Roaming Regulation suggests currently some options that can theoretically be used to implement decoupling provision. "Decoupling" is defined as the separation of home and roaming services between two different PLMN providers for the same subscriber. Among these are Local Break Out (LBO) and Single IMSI.

All solutions have different high needs to impose the obligation for the user to apply for the requested PLMN services or these solutions are complex for the visited PLMN providers as they need additional billing entities and infrastructural changes.

The first type of decoupling involves data roaming services provided directly on a visited PLMN - this model is known as the Local Breakout (LBO). The basic requirements of this decoupling method are the implementation and activation of the processing of data roaming traffic in the visited PLMN and the requirement not to prevent the manual or automatic selection of a visited PLMN.

When the subscriber wishes to opt for a visited PLMN network to provide directly retail data services, he must contract the service with the selected visited PLMN providers, select manually the visited PLMN in the terminal and manually program access points exchanged prior to the visit.

When the subscriber returns or moves back to the home country or continue in another network he must manually reinstall the original access points. Currently there are subscriber awaiting a market offer but still there is no solution between the PLMN providers or any business models that supports the idea, whether for the use of all mobile services nor for pure data usage. A need for a simple and direct payment model is not known today but technical solutions for implementation are requested from the industry. Single IMSI is the second suggested type of decoupling, and shall offer regulated voice, SMS and data roaming services as a bundle. With the Single IMSI method, subscribers can purchase roaming services directly from an alternative roaming partner, referred as ARP, regardless of their home PLMN provider. ARP is the entity that provides alternatively roaming service. The home PLMN provider must prior consent to a general assignment with an ARP. The commercial agreement between the subscriber and an ARP is signed prior to the trip, meaning the subscriber will have a roaming billing agreement with the ARP. The home PLMN provider will be required to provision the network systems with subscriber ARP service details within one working day.

In the case of such agreements, the basic call flow procedure is mainly identical as if the service was offered by the home PLMN provider. The main differences appears in the own billing infrastructure and the billing interface.

However services offered depend on the type of agreement set up by ARP. Visited PLMN providers that may offer additional comprehensive range of services will be involved only so far as they contract with the ARP or in case a visited PLMN provider acts besides as ARP it depends on the agreements between in the ARP and the home PLMN provider. Available other PLMN providers are not involved in the contractual consideration.

The subscriber is neither flexible nor free in his decision for using services as this is still dependent on the consent of the home PLMN provider.

At last, while in a roaming scenario, a mobile wireless station always needs a confirmation of the home PLMN, to use roaming services provided in the visited PLMN. Those roaming services, regulations and conditions are subject to roaming agreements between the wireless network providers. The ability to have fair roaming agreements is critical to all wireless network providers. This results often in a limitation for the subscriber of using services of the visited PLMN or it leads to excessive high charges.

Finally the establishment of a connection to a network always contains the verification of the subscriber identity (authentication).

In particular in roaming context, the verification is either dependent on a given consent of the home PLMN provider and the home PLMN provider must actively consent to a transfer of responsibility for the entirety of services from their home PLMN to third parties PLMN provider. The second option is when it should be independent of the consent of the home PLMN provider then the customer must contract with a visited PLMN provider and apply for a separate USIM/SIM Card.

### SUMMARY OF THE INVENTION

The present invention alternatively avoids the automatic roaming situation while not requiring any consent of the home network provider, referred herein as first cellular network, first PLMN or home PLMN, when a mobile wireless station is located in a visited cellular network, referred herein as second cellular network, second PLMN or visited PLMN.

The present invention is defined, in its broadest sense, as a method of provisioning a secure element of a mobile station, while the mobile station is located in a second cellular network:
- for the mobile station, sending a configuration message towards a remote provisioning server related to a second registration authority, said configuration message including a creation request of a second identity associated with the second registration authority,
- for the remote provisioning server, managing a second identity's creation,
- for the remote provisioning server, sending a response towards the secure element via mobile station including a data record related to the second identity,
- for the secure element, storing the second identity in a memory area able to store data records related to multiple valid identities,
- for the mobile station, activating the second identity using the data record received by the secure element and
- for the mobile station, accessing the second cellular network with the second identity at least for one service.

The invention presently discloses the use of remote provisioning services in order to receive a second identity including identity information and authentication parameters and optionally applications without the consent of the home PLMN provider.

A wireless mobile station is operating within a mobile network. Such a wireless mobile station device preferably contains a communication unit for communication with a wireless air interface which is part of a radio access network and the communication unit interfaces to a secure element. Moreover, when an action is said to be performed by the communication unit, it is in fact executed by one or more microprocessors or digital signal processors in this unit controlled by instruction codes recorded in a program memory on the said unit.

The secure element comprises at least two memory areas to store subscriber identity information and authentication parameters and applications. Further the secure element contains a set of commands, programmed which defines how the secure element should interact directly with the outside world and initiates commands. This enables the secure element to build up an interactive exchange between a PLMN application and the subscriber and access, or control access, to a PLMN.

Further the secure element contains a valid first identity of a first PLMN that certifies the access to a visited PLMN in roaming situation.

Accordingly an application on the secure element can request a temporary identity, which may be temporary, flexible in time or to a service, designated as second identity of a visited PLMN. Subsequently the secure element requests the mobile station to open a radio connection to the radio access networks and sends a configuration message to the remote provisioning server via the radio access network.

Data packets that may be included will not be decoded by the radio access network. After the radio access network received and partly decode said configuration message it forwards the message to the remote provisioning server for further processing.

The remote provisioning server verifies the creation request and initiates a message for generating a second identity to the 2.HLR.

After the remote provisioning server received a response from the 2.HLR, it provides the associated data to the SE, basically taken the same way back via the RAN and the mobile station.

Therefore, in one aspect, the method according to the present invention allows to request and use temporary SE-authentication based information including security data, authentication data, ciphering information, session keys, IMSI etc, as SE-authentication of a visited PLMN without requesting service from the home PLMN. This is advantageous as it avoids the involvement of the home PLMN and eliminates the pass-through charges. Further it is suggested a method wherein a cellular network comprising at least a radio access network, said configuration message is transmitted via the radio access network using a radio protocol between the mobile station and the radio access network comprising an identifier indicating to the radio access network a message dedicated to the remote provisioning server (RPS).

The radio access network (RAN) relates to a visited PLMN and comprises a radio protocol connection to a RPS, wherein a configuration message sent by the mobile station to the RPS is characterized by a header identifier that indicates the RAN about an unique message to the RPS remote provisioning server. Other transmissions than to the RPS may be decoded for regular transmissions to other nodes in the network or further to the home PLMN.

In an alternative embodiment, the RPS is not directly connected to the RAN. Instead the RPS is connected to nodes of the 2.CN in the visited PLMN but the RAN can establish a communication link by sending an adapted network type configuration message to the 2.CN that characterizes the address of the RPS.

It is apparent that this specific configuration message to the connected RPS which relates to a visited PLMN characterizes only a locally bounded processing without the reconcilement of the home PLMN. By the additional way to request provisioning in a visited PLMN, it offers more flexible service granted to the subscriber.

In a further preferred embodiment, it is proposed that the radio protocol is a dedicated routing channel protocol.

Preferably the radio resource connection is thus formed by a signaling context by e.g FACCH or SACCH in 3GPP-2G or e.g. Direct Transfer Messages in 3GPP-3G or e.g. UL Information Transfer or DL Information Transfer in 3GPP-4G.

Thus it is assured that, regardless of the cellular network the wireless mobile station is operating in, the SE communicates via the mobile station with the RAN, carrying the standardized access information. Another advantage is that a configuration message using same signaling frame work for routing messages but not matching the selectable configuration messages identifier is inoffensive for the visited PLMN because it can be handled by any PLMN with standard established rejecting messages. It thus means that a mobile station with a configured SE can request provisioning service from the visited PLMN when available. But, if such a provisioning system is not available to the visited PLMN, it can dispose the request as harmless using only known protocols message exchanges.

Advantageously, the invention described here includes a radio protocol between the mobile station and the radio access network which further comprises data fields transparent to the radio access network, those data fields including encoded data representing the creation request to be decoded by the remote provisioning server.

With this embodiment it is possible to pass the radio access network on base of standardized access messages by establishing a secured tunnel in order to support end to end communication from SE to remote provisioning server. Such end to end communications include a creational request of subscriber data on base of a home PLMN identity, that can only be decoded from the RPS. Without exploring sensitive data from the subscriber to any entity in the visited PLMN, it ensures that SE-authentication based information remains and is used only in those entities used for high level of security.

In a further preferred embodiment, it is suggested a method wherein the RPS manages the step of the creation of a second identity according to the sub steps of:
- receiving the configuration message,
- extracting from the configuration message the creation request,
- forwarding the creation request to the second registration authority,
- receiving from the second registration authority a response characterizing the second identity allowing the access to the second cellular network.

Such a RPS is vested with access limitations and requires a link connection from and to a SE and to a register of the 2.HLR only. The remote provisioning server makes use of the 2.HLR according to the invention in order to be capable of fulfilling its tasks for providing the second identity in the visited PLMN.

While the 2.HLR is typically storing the subscriber identities which have the second PLMN as a home network it is apparent that with the incorporation of the invention also the identity records of visiting users can be stored in the 2.HLR.

In particular the invention offers a solution wherein the second identity is stored in a reserved memory area of the SE equivalent to the first identity memory area.

In this aspect the SE comprises at least two memory areas for the storage, and management of subscriber identities and authentication information.

A first identity or any payment information is mandatory to obtain the possibility to request a temporary identity that legitimates the services for the subscriber. Once the successful provisioning of the SE with a visited PLMN identity (second identity) happened, it provides the capability for the mobile station or its subscriber to change the subscription and use the second identity in parallel to the first identity e.g. for accessing the visited PLMN for mobile originated packaged switched communication calls while typically the first identity remain valid for mobile terminated circuit switched communication calls from the first PLMN.

In an alternative embodiment, mobile terminated and mobile originated communication calls either packaged or circuit switched can use the second identity for the visited PLMN. The first identity may remain active because the visitor core network supports a differentiation of routed services for the mobile station. So the mobile station reacts only on the routed and prior consented services in an appropriate way.

However there is also the possibility that the first identity will remain inactive in that time but is reactived on demand. With this possibility it overcomes the limitation of the subscriber of using beneficiary services of the visited PLMN but being also available.

Further in another preferred aspect of the invention the mobile station (MWS) is operating in a radio access network (RAN). Said MWS is able to transmit to and receive data from the second cellular network via the RAN and to manage responses in such a way that the first and second identities are used in parallel or at least in such a way that calls, SMS and other mobile phone services to be delivered to the MWS use both said identities.

Said cellular network comprises a switching communication unit that allows routing of services to and from the MWS for both identities depending on service preferences which are predefined during the second identity's creation in the 2.HLR. According to one aspect of the invention, it is proposed the configuration message including first registration authority related data coming from the secure element.

This aspect is advantageous as only one configuration message is needed to request a subsequent execution for creation a second identity on base of already available first identity data.

According to a second aspect of the invention it is proposed, while processing the configuration message, the remote provisioning server requests the secure element to provide first registration authority related data, said secure element subsequently requesting the mobile station to open a radio protocol channel to transmit this data.

This second aspect improves the secure exchange of sensitive data. Indeed only the inquiry needs encoded data while the first aspect proposes a direct sending without any additional security demand. The end to end communication can apply by such means for appropriate security levels on the exchanged messages.

According to an advantageous embodiment of the invention, the creation request is associated with payment credentials from or related to the first identity, said payment credentials being used during the creation of the second identity.

This advantageous embodiment comprises an essential option about the verification and approval to create a second identity without further reconcilement of the first PLMN. In prior art, it has to be provided by the 1.HLR during standard roaming service requests.

Typically data to obtain a temporary identity certificate can be derived directly from the first identity data or as an attachment related to a payment method such as accepting credit cards, debit cards, bank accounts, and of course PayPal, NFC payment credentials.

The invention further relates to a secure element intended to be connected to a mobile station, dedicated to work in a cellular network, said secure element belonging to a first registration authority where it has a first identity, said secure element further having at least:
- an application able to trigger a provisioning method according to the invention,
- an interface with the mobile station to receive data records related to a second identity,
- a memory area to store data records related to multiple but at least two identities, said storing enabling the mobile station to use each of the stored identities for telecommunication traffic.

The secure element is being integrated either in the mobile station or is independent from the mobile station but connected in order to give the applications located on the secure element the possibility to interact through the mobile station with the network according to the method of the invention. In a preferred embodiment the application interfaces to the mobile station to open a radio protocol channel to transmit a creation request of a second identity.

The invention also relates to a mobile station designed to work in a cellular network and comprising a secure element to be provisioned according to a method of the invention, said mobile station comprising a communication unit to send a configuration message towards a remote provisioning server related to a second registration authority, said configuration message including a creation request of a second identity associated with the second registration authority, to receive a response to be transmitted to the secure element including a data record related to the second identity and to activate the second identity using the data record received by the secure element to enable the access to the cellular network with the second identity.

According to an embodiment, the mobile station being able to operate within at least two cellular networks, said mobile station is able to transmit to and receive data from the cellular networks and managing responses from the cellular networks in such a way that, when receiving an error message in response to a previously send configuration message from one of the radio access networks it changes the cellular network and re-send a configuration message to the other cellular network.

According to a preferred use of the invention, the mobile station is configured to use the second identity for mobile station originated communication and to use the first identity for mobile station terminated communications.

In another aspect of the invention, the mobile station is configured to use only the second identity for accessing the second cellular network for mobile station terminated.

In yet another aspect to a preferred embodiment of the invention, the mobile wireless station is configured to use the first or second identity in dependence of a subscriber choice. The choice is preferable supported by a GUI or human machine interface but could also be in the case of machine-to-machine communication any kind of accessible interface that allows controlling the mobile station. Further the invention also relates to a cellular network to enable a provisioning method according to the invention, said cellular network being connected to a remote provisioning server, said cellular network further comprising a radio access network to receive configuration messages and to transmit them to the remote provisioning server.

By event, it is regardless where the remote provisioning server is located in the cellular network. It can connect to entities of the core network (e.g. MSC, SGNS) but also to entities in the radio access network (BSC/BST, RNC/node B, eNodeB). Preferably for an efficient and lean management between the MWS and the remote provisioning server, the remote provisioning server connects to the radio access network. By this, it simplifies the architecture and allows lower response times.

According to a preferred embodiment of the invention, the radio access network uses a radio protocol between the mobile station and the radio access network comprising an identifier indicating to the radio access network a message dedicated to the remote provisioning server.

### BRIEF DESCRIPTION OF THE DRAWINGS

For a more complete understanding of the invention, the invention will now be described in details and by way of example with reference to the accompanying drawing, wherein:
FIG.1 illustrates an architecture of a cellular network of prior art;
FIG.2 schematically shows a communication sequence chart between network nodes as currently performed according to the prior art;
FIG.3 is an exemplary cellular network architecture implementing a provisioning method according to the invention;
FIG.4 schematically shows a communication sequence chart between the network nodes representing the provisioning process of the secure element with a second identity;
FIG. 5 shows a flow diagram of the processing of a configuration message in the radio access network according to the invention;
FIG. 6 shows a flow diagram of the processing of an identity request message in the remote provisioning server in connection with a 2.HLR according to the invention;
FIG.7 shows an exemplary cellular network architecture implementing an embodiment of the provisioning method of the invention connecting the core network with the remote provisioning server;
FIG.8 shows a system of cellular networks, with one cellular network implementing a provisioning method of a secure element according to the invention;
FIG. 9 shows a communication sequence chart using the second identity in the second cellular network for mobile originated call and mobile terminated calls;
FIG. 10 shows a communication sequence chart of using the first and second identity for different services of mobile originated calls;
FIG. 11 shows a communication sequence chart of using the first and second identity for different services of mobile terminated calls;
FIG. 12 illustrates the architecture of cellular networks operating in different cellular communication standards 2G, 3G or 4G and options for serving an alternative connection between nodes of the cellular networks to a remote provisioning server.

### DETAILED DESCRIPTION

The same elements have been designated with the same reference numerals in the different drawings. For clarity, only those elements and steps which are useful to the understanding of the present invention have been shown in the drawings and will be described.

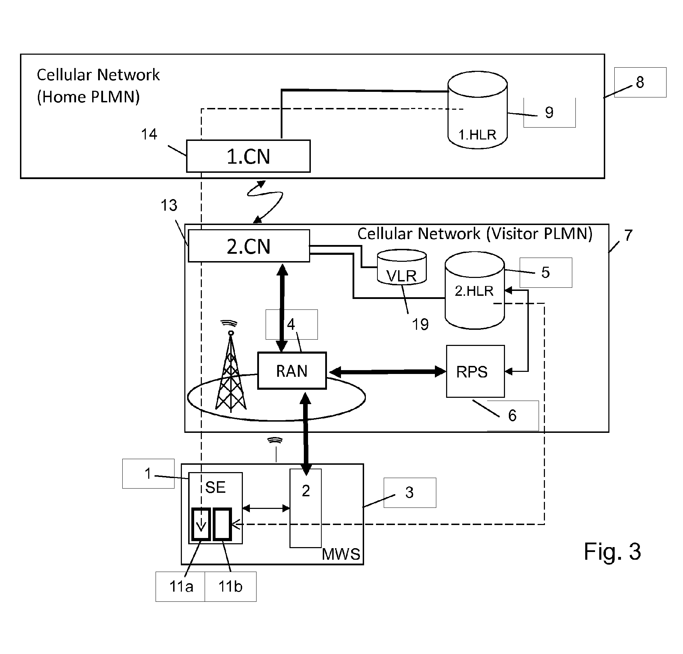

FIG. 3 schematically shows an exemplary cellular network architecture implementing a provisioning method according to the invention. It gives an overview of a preferred system according to the invention's composition.

Additionally to figure 1, for the purpose of the invention, the SE 1 is prepared to incorporate enhanced memory means 11 b for storing identity records at least of the same characteristics as memory means 11 a, including the capability to store individually provisioning data records.

For the need of the invention, the PLMN 7 is advanced and includes a remote provisioning server 6, referenced RPS in the following, with a routing protocol structure between the RAN and the RPS.

The communication from the SE 1 to the RPS 6 for submitting a identity request can be carried out through an assigned communication which is preferably transparent for the MWS 3 and the RAN 4. For such interworking procedures between the MWS 3 and the RAN 4 technology, the MWS 3 opens preferably a radio channel depending on one of the cellular wireless standard technology 2G, 3G, 4G such as dedicated signaling channels e.g. FACCH/SACCH for 2G or Direct Transfer Message for 3G or similar to the RAN 4. Then the RAN 4 forwards the communication on a routing protocol channel to the RPS 6.

Further the RPS 6 can connect to the 2.HLR 5 through a secured connection in order to initiate, receive and manage a request for generation of a subscriber identity with associated secured keys and authorization. This is symbolized by an arrow between the entities RPS 6 and 2.HLR 5. The interface may be of logical and physical channels to exchange secured data. In response to the request, the 2.HLR 5 provides on this interface the requested provisioning data, security keys and authentication data to the RPS 6.

Accordingly, the provisioning data, security keys and authentication data associated with the second identity are provided to the SE 1 installing the secure data in the memory means 11 b. An authenticating SE-based user link to the PLMN 7, is schematically represented in the figure 3 by a dashed line between the 2.HLR 5 and the memory means 11 b of the SE 1.

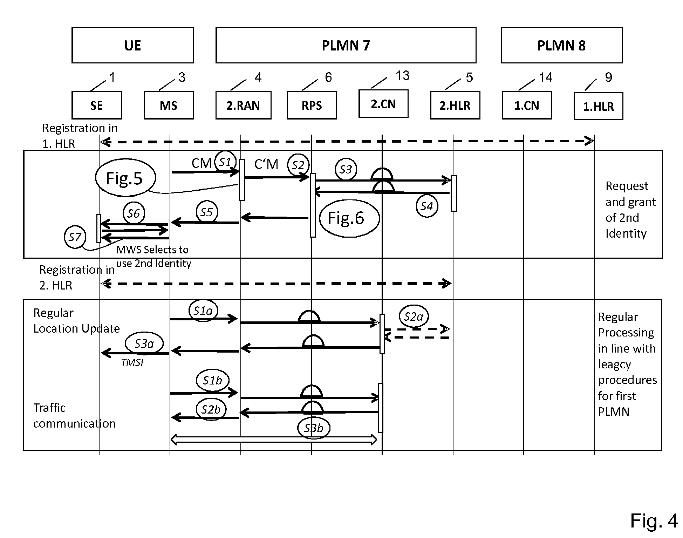

Fig. 4 shows a communication sequence path for the provisioning of a SE 1 with a second identity according to one of the embodiment.

The MWS 3 is configured to operate with a RAN 4 of a visited PLMN 7 and wishes to establish a call to the RPS 6 of this visited PLMN and so it requests a radio resource control (RRC) connection. The RAN 4 accepts the RRC connection request from the MWS 3 and assigns a traffic channel.

Figure 4 then schematically shows the successive steps of the method of the invention. The MWS 3 starts the requests to the RPS 6 with sending a configuration message CM, at step S1. This configuration message CM has preferably a defined header identifier that identifies a configuration message dedicated to the RPS 6.

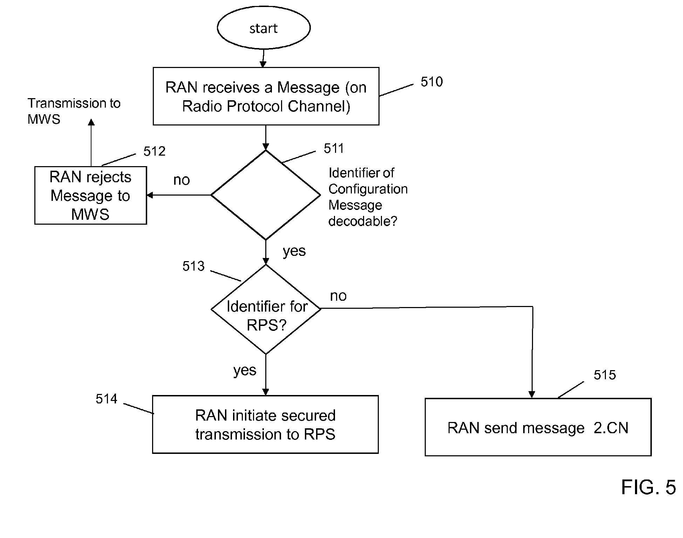

The 2.RAN 4 identifies, on base of the header identifier, a message to the RPS 6 and forwards the message to the RPS 6. The message at step S2 can be a modified message C'M of the configuration message CM according to the network type necessary for the communication. At step S3 the RPS 6 forwards the requests for the processing along with a network type to the 2.HLR 5 based on first identity data. The steps of further assessing and managing the messages are further detailed in Fig.5.

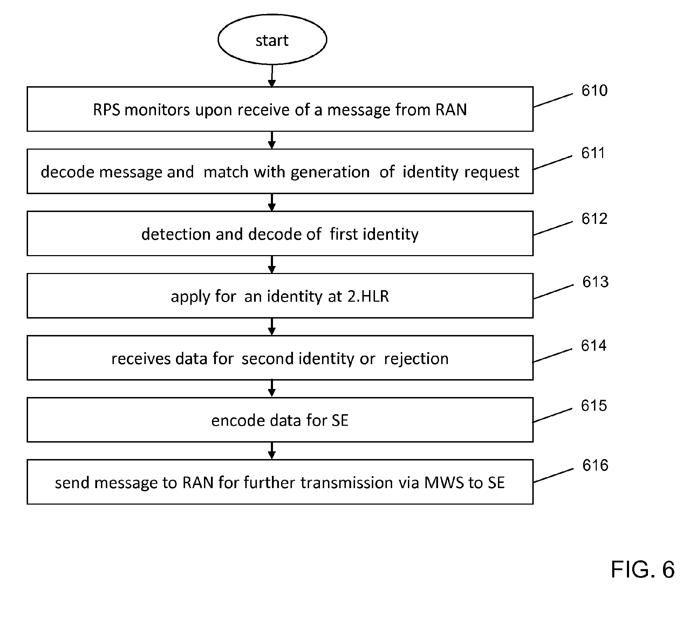

The 2.HLR 5 processes the messages and derives a subscription key associated with the registration of the first identity. Subsequently the 2.HLR 5 provides the second identity data record to the RPS 6, at step S4. The related processing is detailed in Fig. 6. During the following step, the RPS 6 will encode the received second identity data record for the transmission to the MWS 3, via 2. RAN 4.

The RAN 4 then transmits via a radio channel the message to the MWS 3, step S5, and further to the SE 1, step S6, for installing the second identity data record in memory means 11 b. Accordingly the SE 1 advantageously provides to the MWS 3 an information of successful installed identity record, step S7, afterwards the MWS 3 has the capability to select from a list a valid identities.

Figure 4 further schematically shows the selection of the second identity for further communication with the visited PLMN 7.

Accordingly, for the MWS 3, the regular accessing to the PLMN 7 means further authentication and security reconcilements to the 2.HLR 5 and the 2.CN 13 under known principles of the wireless communication standard. Exemplary it is shown a simplified location update procedure, starting at step *S1a* and an establishment of traffic communication on the PLMN 7 starting at step *S1b,* which determines standard communication procedures within the PLMN 7.

For a location update procedure at step *S1a,* the MWS 3 establishes a radio resource connection to start the location update to the 2.RAN 4. The location updating request is forwarded to the 2.CN 13. The 2.CN 13 is the current location area compared with a former location area. When the 2.CN 13 finds that the old location area was handled by a different controller entity in the 2.CN 13, it requests the 2.HLR 5 to update the new location area, step S2a. Afterwards the 2.CN 13 replies back to the MWS via the 2.RAN 4. The message also assigns a new temporary identity, designated as TMSI, to the SE 1 in step *S3a*. Said temporary identity is the second identity stored in SE 1.

At step S1b the MWS 3 starts to request the 2.CN 13 to establish a traffic communication. The 2.CN 13 identifies an identity belonging to the PLMN 7 and grants the channel to the MWS 3 at step S2b. The 2.CN 13 opens subsequently the traffic channel for further communication to the MWS 3, step S3b.

Fig. 5 is a flow diagram illustrating an exemplary method of establishing a configuration message management within the RAN. The RAN 4 is configured to process advanced configuration messages according to the invention. In a first step 510, the RAN 4 determines if there is a transmission of a message on a radio resource channel.

In a step 511, when a message is received, the RAN 4 detects if the received message is a configuration message. As seen before, configuration messages advantageously include a header identifier that indicates a message to the RPS 6. Preferably configuration messages further include advanced data packages that symbolize a request to generate a second identity and optional data packages characterizing the first identity. Such further data packages are transparent for the RAN 4 and will not be decoded. The data packages that characterize the first identity can alternatively be requested by the RPS 6 separately by additional traffic.

If the RAN 4 accidently cannot decode the header as a configuration message (case "no") then RAN 4 responses, in a step 512, to the MWS 3 with a rejection message to the foregoing request.

In case the configuration message header matches with one of either listed header identifier (case "yes"), then RAN 4 determines whether the message is to be transmitted to the 2.CN 13 or to the RPS 6 address.

In a step 513, RAN 4 determines if the header identifier determines a message to the RPS 6 and, if it is the case (case "yes"), then RAN 4 initiate a secure transmission to the RPS 6, in a step 514. When the message does not address the RPS 6 (case "no") but instead typically a node in the 2.CN 13 then in a step 515, the message is send to the 2.CN 13.

Fig. 6 is a flow diagram illustrating an exemplary method for processing an identity request message in the RPS 6 with subsequent request for generating security and authentication keys with anticipation of the 2.HLR 5. The RPS 6 is configured to transmit and receive messages for and to the RAN 4 and is able to establish a secured connection to the 2.HLR. 5.

Then in a step 610, the RPS 6 monitors configuration messages from the RAN 4. In a step 611, received configuration messages are decoded. According to the invention, such messages contain a request for generating a subscriber PLMN identity. In a step 612, the RPS 6 subsequently decodes data packages within the configuration message that characterizes a first identity on which base the generation of a second identity will be processed. Such data can be associated with a first identity (e.g. IMSI) or with payment credentials. Preferably payment credentials can be credit card information, bank account numbers, NFC payment authorization and other for payment used authorization data. If no data packages are found, the RPS 6 can request the corresponding data for the first identity from the SE 1 basically using the same way back as the initial request.

When all data package are decoded and preferably upon successful verification of the payment credentials related to the first identity, the RPS 6 provides a request for generating a second identity to the 2.HLR 5 in a step 613. This includes the generation of security keys, security parameters and IMSI for operating in the PLMN 7.

Depending on the successful creation of security parameters, the RPS 6 receives a message from the 2.HLR with associated second identity data records in a step 614. Such data are encoded in a step 615 for the purpose of the SE to decode the data, then a message is send back to the SE 1 using the way back via the RAN 4 and MWS 3 in a step 616.

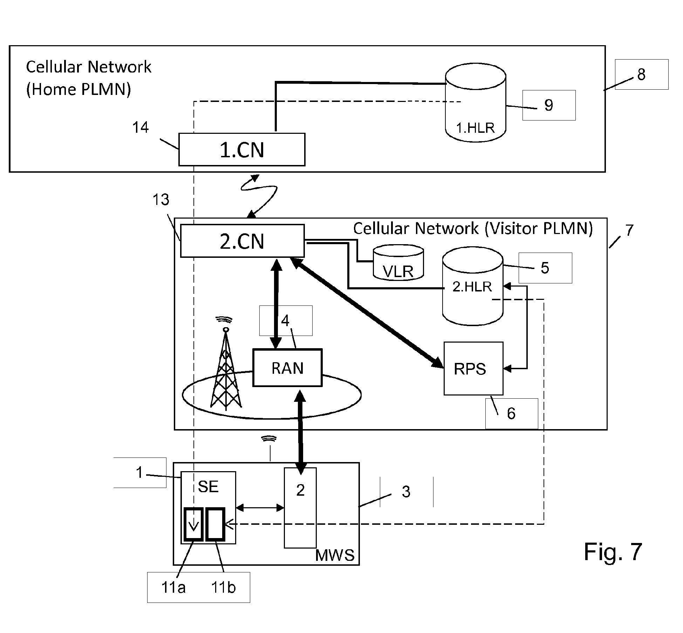

Fig 7. shows an alternative implementation that substantially supports the provisioning method of this invention. In contrast to Fig. 3 the RPS 6 is connected to existing network nodes in the 2.CN 13 instead of the connection between the RAN 4 and the RPS 6 for the RPS 6 to receive the configuration message. In today's PLMN's implementations, the CNs frequently incorporates nodes which serve a large number of users. Thus, with the invention advantageously used in this alternative implementation,, fewer provisions towards the RPS 6 are needed, i.e. fewer connections are expected between RPS 6 and 2.CN 13 nodes than between RPS 6 and a significant number of RANs. In this way, a large number of users can benefit from the upgraded service offered in the visited cellular network, whilst the number of to-be-upgraded nodes can remain limited.

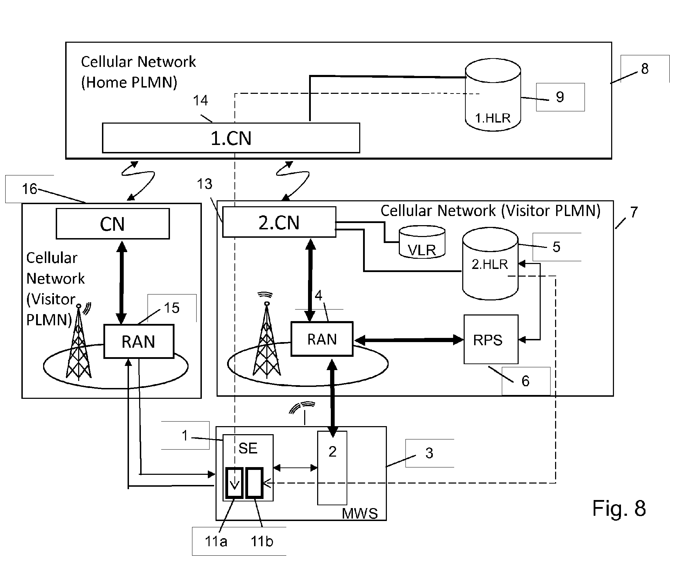

Fig.8 describes the situation in which the MWS 3 operates with a RAN 15 and requests provisioning service for a PLMN 16 in a situation where the PLMN 16 does not provide any remote provisioning method according to the invention. For its basic functioning, the PLMN 16 comprises entities and nodes similar to other PLMNs, in particular it comprises a RAN 15.

The MWS 3 wishes to establish a call to any RPS and requests therefore a radio resource control (RRC) connection from the RAN 15 in order to receive provisioning service for the SE 1.

As the RAN 15 is not capable to provide remote provisioning services, it rejects the request. The MWS 3 is configured to either request roaming services through PLMN 16 to PLMN 8 or preferably automatically changes to another RAN, here RAN 4 in the PLMN 7, and restarts an attempt to receive provisioning services from the PLMN 7, described also in Fig. 3.

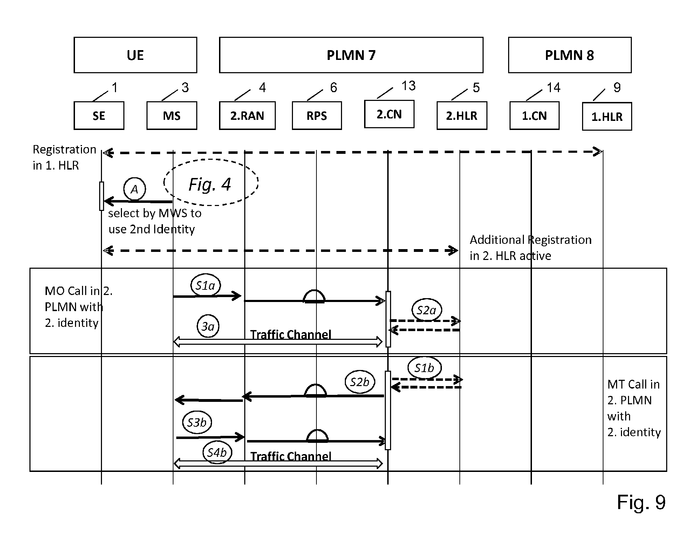

FIG.9 shows schematically a communication sequence chart using the second identity in the second cellular network for mobile originated call and mobile terminated calls.

At the beginning of figure 9 the SE 1 is affiliated with the 1.HLR 9 as shown by a dashed line. Afterwards the method of provisioning a SE 1 with a second identity is executed according Fig. 4. The MWS 3 at step A is configured to use the second identity for mobile originated and mobile terminated call services for all kinds of sub services. In the following, for mobile originated call, call related information needs to be transported from the MWS 3 to the 2.CN 13 entities and nodes.

It begins with the procedures related to a MO Call with second identity but it should be noted that there is no sequence dependency and the procedures MO Call and MT Call with second identity can also occur in a reverse order. The first phase of the call setup just sets up a connection at step S1 a via the RAN 4 to the 2.CN 13.

The 2.CN 13 at step S2a checks with the 2.HLR 5, if the subscriber has been authenticated. In this case, the subscriber has already been authenticated as participating temporary subscriber of PLMN 7 so other roaming authentication procedures are skipped and 2.CN 13 grants a traffic channel to the MWS 3 at step S3a

Besides FIG. 9 shows schematically a mobile terminated call procedure, the call is originating from outside or inside the PLMN 7 and addresses one call number of an MWS 3 located in the PLMN 7.

Once the MWS 3 has been located as being attached to one area in the PLMN 7, the 2.CN 13 requests, at step S1b, routing information for the subscriber from the 2.HLR 5. The 2.HLR 5 has identified that the subscriber is currently being served in the PLMN 7 as participating temporary subscriber of PLMN 7 and do not request the 1. HLR 9 for any roaming authentication procedures. Upon acknowledgement, the 2.CN 13 sends a request for call to the MWS 3 via the 2.RAN 4 at step S2b. In consequence, the MWS 3 provides at step S3b its acknowledge back to the 2.CN 13 via the 2.RAN 4. Then the 2.CN 13 establishes an appropriate traffic channel for the call data at step S4b.

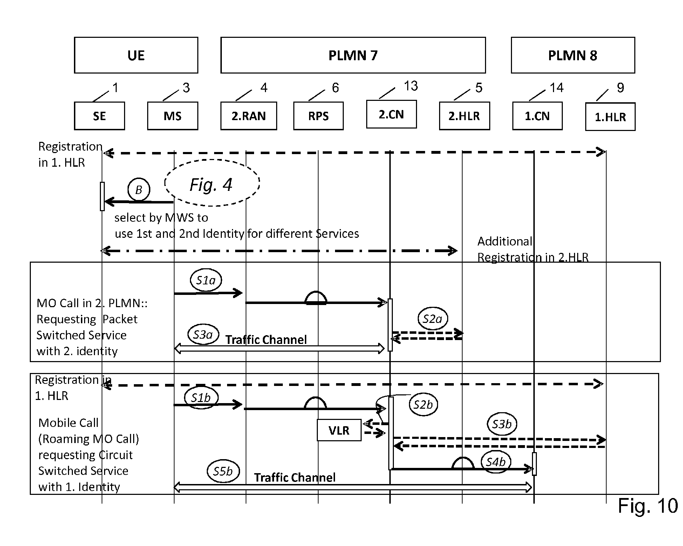

Figure 10 shows schematically in an exemplary communication sequence chart using the first and the second identity in the visited (second) cellular network for different but prior defined services. At the beginning of figure 10 the SE 1 is affiliated with the 1.HLR showed by a dashed line. Further the method of provisioning a SE 1 with a second identity is executed according to the method described in Fig. 4. The MWS 3 at step B is configured to use the first and second identity for different services. Following this description, the registration with a valid additional registration in the 2.HLR 5 is symbolized by a dotted-dashed line.

Further it is here assumed that the MWS 3 is configured using the second identity for mobile originated calls for packaged services and using the first identity for mobile terminated calls for circuit switched services.

It begins with the procedure MO Call e.g Packaged Switched with second identity but it should be noted that there is no sequence dependency and the procedures can also occur in a reverse order beginning with the MO Call for Circuit Switch with first identity.

The first phase of the call setup just sets up a connection at step S1 a via the 2.RAN 4 to the 2.CN 13.

The 2.CN 13 at step S2a checks with the 2.HLR 5, if the subscriber has been authenticated. In this case, the subscriber has already been authenticated as participating temporary subscriber of PLMN 7 so other roaming authentication procedures are skipped and 2.CN 13 grants a traffic channel to the MWS 3, step S3a.

It should be noted that for the following procedure the SE uses then the first identity for the configured services thus is affiliated to the 1.HLR for MO Calls Circuit Switched services.

In case of a MO Call, the MWS 3 starts at step S1 b the radio connections to the 2.RAN 4 which routes the requesting call to the 2.CN 13 where the 2.CN 13 requests further information from the VLR 19, to handle the outgoing call.

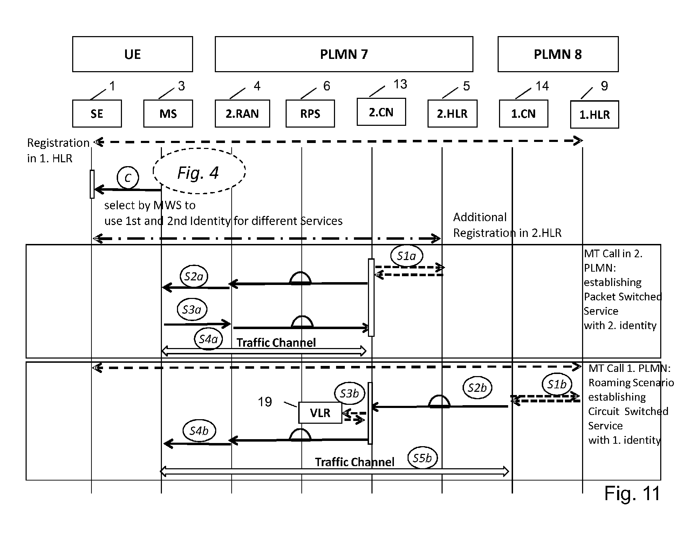

If the VLR 19 in connection with a request to the 1.HLR, step S2b and S3b, determines that the outgoing call is allowed, it requests the establishment of a communication channel at the 1.CN, step S4b. On this base, a traffic channel from the MWS 3 to the destination in the 1.CN 14 is established, at step S5b, and further the call may be routed to a 3^{rd} party in the network. Figure 11 shows schematically an exemplary communication sequence chart using the first and the second identity in the visited (second) cellular network, PLMN 7, for different but defined services. At the beginning of figure 11, the SE 1 is affiliated with the 1.HLR showed by a dashed line. Further the method of provisioning a SE 1 with a second identity is executed according to Fig. 4.

The MWS 3 at step C configures to use the first and second identity for different services. Following this description, the registration with a valid additional registration in the 2.HLR 5 is symbolized by a dotted-dashed line. Further assuming that the MWS 3 is configured to use the second identity for mobile terminated calls for packaged switched services and using the first identity for mobile terminated call for circuits switched services.

At first it begins with the procedure MT Call 2. PLMN and the drawing describes schematically a mobile terminated call procedure, the call being originated from outside or inside the PLMN 7 and addressing one call number of an MWS 3 located in the PLMN 7.

Once the MWS 3 have been located as being attached to one area in the PLMN 7, the 2.CN 13 requests at step S1a routing information for the subscriber from the 2.HLR 5. The 2.HLR 5 has identified that the subscriber is currently being served in the PLMN 7 as participating temporary subscriber of PLMN 7 and do not request the 1.HLR 9 for any roaming authentification procedures. Upon acknowledgement, the 2.CN 13 sends a request for call to the MWS 3 via the 2.RAN 4 at step S2a, in consequence the MWS 3 provides at step S3a its acknowledge back to the 2.CN via the 2.RAN 4. Then the 2.CN 13 establishes an appropriate traffic channel for the call data at step S4a.

For the following MT Call procedure, the SE 1 remained registered with its first identity in the 1. HLR, symbolized with a dashed line between the SE and the 1.HLR in the box, and the MWS 3 is still located in the area of the visited PLMN 7. When a MT Call from outside or inside the 1. PLMN 8 to the MWS 3 has to be established, the call is routed at step S1 b from the 1.CN 14 to the 2.CN 13 which requests routing information from the 1.HLR 9, step S2b and the visitor location register VLR 19, step S3b, in order to route the call to the 2. RAN 4 in whose area the MWS 3 of the respective user currently is roaming and further establishes the radio connection between the 2.RAN 4 to the MWS 3, at step S4b and then subsequently establishes the traffic channel between the 1.CN 14 and the MWS 3, step S5b.

The figures 10 and 11 illustrate exemplary services calls distinguished by the origin of the service MO Call in the 2.PLMN, requesting Packaged Switched Services or MT Call in the 1. PLMN requesting Circuit Switched Services, with different PLMN identities. Any combination out of this enumeration (MO Call, MT Call, requesting Circuit Switched Services, requesting Packaged Switched Services, establishing Circuit Switched Services, establishing Packaged Switched Services with same identity or different identity) is thinkable and also sub services for the call connections are included in this way for the purpose of this invention.

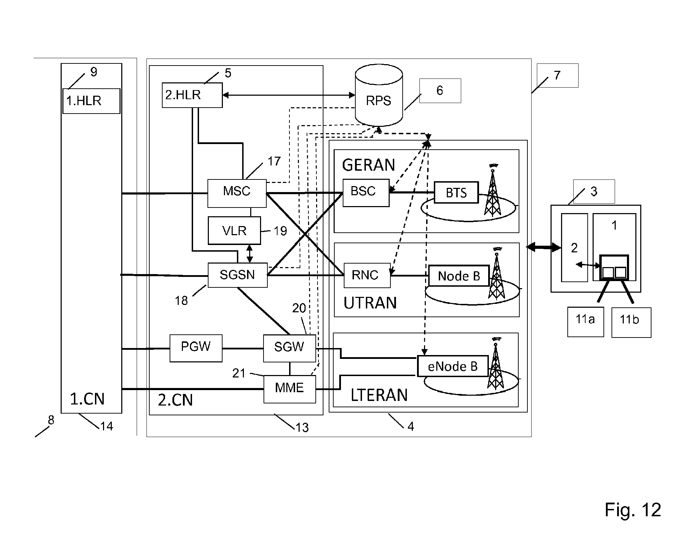

Referring to Fig. 12, a wireless communication network with representatives mobile wireless networks that support 2G, 3G, and 4G wireless technologies (such as 3GPP, LTE and LTE advance) is shown. The wireless communication preferably includes at least one MWS 3, a PLMN 7 that comprises at least one RAN 4 of certain technology (such as 3GPP, LTE and LTE advance), a core network 13, and a PLMN 8 that comprises a core network 14 and 1.HLR 9

Depending on the network technology the MWS 3 communicates with the PLMN 7 via an adapted air interface with the RAN 4. The MWS 3 may include any device capable of connecting to the RAN 4, including mobile phones, fixed or mobile terminals, tablet computer, laptops mobile router access cards, etc.

The RAN 4 includes the antenna towers, base stations and corresponding controllers (BTS,BSC, NodeB RNC, eNodeB).

The core network 13 includes depending on its implemented wireless technology, a mobility entity (MME), a serving gateway node (SGW), a mobile switching center (MSC) responsible for routing voice calls and SMS as well as other services such as conference calls, FAX and circuit switched data, a serving packet support node( SGSN) responsible for the delivery of data packets, a visitor location registration (VLR), a 2.HLR typically a home location register for users of the PLMN 7, and an remote provision system, RPS 6.

In this example, the RPS 6 is preferably connected to the RAN 4 with the nodes BSC in 2G technology or to the RNC in 3G technology or eNodeB in 4G technology.

Possible embodiments also mentioned in Figure 7 concern the implementation of the connection of the RPS 6 to nodes of the CN 13 in particular to the MSC 17, SGSN 18 or SGW 20 or MME 21. All interface connections between the RPS and the CN or the RAN are symbolized by dotted lines. While the drawing contains many possible connections it is preferable that only one option either RPS 6 to RAN 4 or RPS 6 to CN 13 is implemented.

## Claims

1. Method of provisioning a secure element (1) of a mobile station (3), dedicated to work in a cellular network, said secure element 1 belonging to a first registration authority (9) where it has a first identity, said method being **characterized by** the steps of, while the mobile station (3) is located in a second cellular network (7):
- for the mobile station (3), sending a configuration message towards a remote provisioning server (6) related to a second registration authority (5), said configuration message including a creation request of a second identity associated with the second registration authority (5),
- for the remote provisioning server (6), managing a second identity's creation,
- for the remote provisioning server (6), sending a response towards the secure element (1) via mobile station (3) including a data record related to the second identity,
- for the secure element (1), storing the second identity in a memory area able to store data records related to multiple valid identities,
- for the mobile station (3), activating the second identity using the data record received by the secure element (1) and
- for the mobile station (3), accessing the second cellular network (7) with the second identity at least for one service.

2. Method according to claim 1, wherein, said second cellular network (7) comprising at least a radio access network (4), said configuration message is transmitted via the radio access network (4) using a radio protocol between the mobile station 3 and the radio access network (4) comprising an identifier indicating to the radio access network (4) a message dedicated to the remote provisioning server 6.

3. Method according to claim 2, wherein the radio protocol is a dedicated routing channel protocol

4. Method according to one of claims 2 and 3, wherein the radio protocol between the mobile station (3) and the radio access network (4) further comprises data fields transparent to the radio access network (4), those data fields including encoded data representing the creation request to be decoded by the remote provisioning server (6).

5. Method according to one of the preceding claims, wherein the step of managing the creation of a second identity comprises the sub steps of:
- receiving the configuration message,
- extracting from the configuration message the creation request,
- forwarding the creation request to the second registration authority (5),
- receiving from the second registration authority (5) a response characterizing the second identity allowing the access to the second cellular network (7).

6. Method according to one of the preceding claims, wherein the second identity is stored in a reserved memory area (11 b) of the secure element equivalent to the first identity memory area (11 a).

7. Method according to one of the preceding claims, wherein said configuration message includes first registration authority (9) related data, coming from the secure element (1).

8. Method according to one of the claims 1 to 6, wherein, while processing the configuration message, the remote provisioning server(6) requests the secure element (1) to provide first registration authority (9) related data, said secure element (1) subsequently requesting the mobile station(3) to open a radio protocol channel to transmit this data.

9. Method according to one of the preceding claims, wherein the creation request is associated with payment credentials from the first identity, said payment credentials being used during the creation of the second identity.

10. Secure element (1) intended to be connected to a mobile station (3), dedicated to work in a cellular network, said secure element (1) belonging to a first registration authority (9) where it has a first identity, said secure element (1) further having at least:
- an application able to trigger a provisioning method according to one of claims 1 to 9,
- an interface with the mobile station (3) to receive data records related to a second identity,
- a memory area to store data records related to multiple but at least two identities, said storing enabling the mobile station (3) to use each of the stored identities for telecommunication traffic.

11. Secure element (1) according to claim 10, wherein the application interfaces to the mobile station (1) to open a radio protocol channel to transmit a creation request of a second identity.

12. Mobile station (3) designed to work in a cellular network and comprising a secure element (1) to be provisioned according to one of claims 10 and 11, said mobile station (3) comprising a communication unit (2) to send a configuration message towards a remote provisioning server (6) related to a second registration authority (5), said configuration message including a creation request of a second identity associated with the second registration authority(5), to receive a response to be transmitted to the secure element (1) including a data record related to the second identity, and to activate the second identity using the data record received by the secure element (1) to enable the access to the second cellular network (7) with the second identity.

13. Mobile station (3) according to claim 12, wherein the mobile station (3) being able to operate within at least two cellular networks (16,7), said mobile station (3) is able to transmit and receive data from the cellular networks (16,7) and managing responses from the cellular networks (16,7) in such a way that, when receiving an error message in response to a previously send configuration message from one of the radio access networks (15) it changes the cellular network (16) and re-send a configuration message to another cellular network (7).

14. Mobile station (3) according to one of claims 12 and 13, said mobile station (3) being configured to use the second identity for mobile station originated communication and to use the first identity for mobile station terminated communications.

15. Mobile station (3) according to one of claims 12 and 13, said mobile station (3) being configured to use only the second identity for accessing the second cellular network for mobile station terminated communications and mobile station originated communications.

16. Mobile station (3) according to one of the claims 12 to 15, said mobile station (3) being configured to use the first or second identity in dependence of a subscriber choice.

17. Cellular network (7) to enable a provisioning method according to one of the claims 1 to 9, said cellular network (7) being connected to a remote provisioning server (6), said cellular network (7) further comprising a radio access network (4) to receive configuration messages and to transmit them to the remote provisioning server (6).

18. Cellular network (7) according to claim 17, wherein the radio access network (4) uses a radio protocol between the mobile station (3) and the radio access network (4) comprising an identifier indicating to the radio access network (4) a message dedicated to the remote provisioning server (6).
